# NEUE EUROPÄISCHE PATENTSCHRIFT

(11) **EP 3 208 038 B2**
(45) Veröffentlichungstag und Bekanntmachung des Hinweises auf die Entscheidung über den Einspruch: **13.12.2023**
(45) Hinweis auf die Patenterteilung: 23.09.2020
(21) Anmeldenummer: 17164894.2
(22) Anmeldetag: 10.07.2015
(51) Int. Cl.: B24B 27/08, B24B 55/05, B24B 23/02, B24B 55/10, B23Q 11/08, B27G 19/04, B23D 45/16, B23D 59/00

(54) **HAND-TRENNGERÄT**
MANUAL SEPARATION DEVICE
APPAREIL DE SÉPARATION MANUEL

(30) Priorität: 11.07.2014 DE 102014010304
(43) Veröffentlichungstag der Anmeldung: 23.08.2017
(62) Teilanmeldung aus: 15176198.8
(73) Patentinhaber: Festool GmbH, 73240 Wendlingen am Neckar (DE)
(72) Erfinder: Veselý, Zbynek, 47001 Ceská Lípa (CZ); Blazek, Jiri, 47158 Cvikov-Lindava (CZ)
(74) Vertreter: Patentanwälte Bregenzer und Reule Partnerschaftsgesellschaft mbB

(56) Entgegenhaltungen:
- EP-A1- 1 053 829
- EP-A1- 1 642 674
- EP-A1- 2 666 592
- DE-B3-102004 035 876
- DE-C- 900 010
- DE-T2- 69 729 977

## Beschreibung

Die Erfindung betrifft ein freihändig führbares Hand-Trenngerät, insbesondere Handtrennschleifer oder Winkelschleifer, gemäß dem Oberbegriff des Anspruchs 1.

Es ist allgemein bekannt, bei sogenannten Winkelschleifern die Oberseite der Trennscheibe, also des Trennwerkzeugs, durch eine Haube abzudecken. Diese Maßnahme trägt zur Sicherheit bei und ermöglicht zudem eine Staubabfuhr, indem z.B. an einer derartigen Abdeckvorrichtung, beispielsweise einer Abdeckhaube, ein Sauganschluss zum Absaugen von Partikeln, Spänen oder dergleichen, die beim Betrieb des Trenngeräts anfallen, angeordnet ist.

Die bekannten Abdeckvorrichtungen müssen jedoch, wenn sie beim Arbeitsbetrieb im Weg sind, abgebaut werden. Beispielsweise ist dann eine Verklemmung mit einem Flansch, an dem die Werkzeugaufnahme vorgesehen ist, zu lösen. Das ist allerdings umständlich.

Ein Hand-Trenngerät gemäß dem Oberbegriff des Anspruchs 1 ist z.B. in DE 697 29 977 T2 oder EP 2 666 592 A1 erläutert.

Es ist daher die Aufgabe der vorliegenden Erfindung, eine verbesserte Abdeckvorrichtung, insbesondere eine Absaughaube, für Trenngeräte, beispielsweise sogenannte Winkelschleifer, bereitzustellen.

Zur Lösung der Aufgabe ist ein Hand-Trenngerät gemäß der technischen Lehre des Anspruchs 1 vorgesehen.

Bei dessen Formulierung wird z.B. zwischen einer maximal geöffneten Offenstellung und der Abdeckstellung unterschieden. Man könnte aber auch sagen, dass das Abdeckelement zwischen der Abdeckstellung und einer maximalen Offenstellung verstellbar ist und mindestens eine Offenstellungsposition als Zwischenposition zwischen der Abdeckstellung und der maximalen Offenstellung vorgesehen ist.

Es ist ein Grundgedanke der vorliegenden Erfindung, dass die Abdeckvorrichtung, die beispielsweise in der Art einer Haube ausgestaltet ist, mehrteilig ist, wovon jedoch nur ein Teil bezüglich des Maschinengehäuses ortsfest ist, nämlich die Seitenrandabdeckung. Diese kann selbstverständlich auch einen großen Teil des Trennwerkzeugs bzw. der Trennscheibe einhausen, beispielsweise auch eine Stirnseite oder Flachseite. Das Abdeckelement hingegen ist beweglich, das heißt es kann um die Werkzeug- oder Drehachse des Trennwerkzeugs oder eine dazu parallele Achse schwenken und so einen größeren Arbeitsbereich des Trennwerkzeugs freigeben, was beispielsweise für Trennschnitte in Innen-Eckbereiche des Werkobjekts vorteilhaft ist.

Vorteilhaft ist vorgesehen, dass an dem Abdeckelement ein Sauganschluss für eine Staubabsaugeinrichtung angeordnet ist.

Der Sauganschluss an dem beweglichen Abdeckelement ist sozusagen stets an Ort und Stelle, nämlich dort wo der Staub entsteht. Der Staub wird also vorteilhaft direkt an seinem Entstehungsort abgesaugt.

Eine Drehrichtung des Trennwerkzeugs ist vorzugsweise so, dass es aus dem Werkstück austretend in Richtung des Sauganschlusses dreht. Der sozusagen aus dem Werkstück herausgeschleuderte Staub kann also vorteilhaft unmittelbar abgesaugt werden, nämlich durch den Sauganschluss.

Es ist also eine Staubabsaugung möglich. An dem beweglichen Abdeckelement, ist ein Sauganschluss für eine Staubabsaugeinrichtung, beispielsweise einen Staubsauger, angeordnet. Bei dem Sauganschluss handelt es sich vorzugsweise um einen Stutzen oder Rohrkörper, an den ein Saugschlauch anschließbar ist. Somit können am Arbeitsort anfallende Artikel, Späne oder dergleichen, direkt durch die Abdeckvorrichtung hindurch abgesaugt werden.

Besonders bevorzugt ist es, wenn der Anschluss an den freien Endbereich des Abdeckelements angeordnet ist. Bevorzugt ist dies dann der vordere oder vorderste Arbeitsbereich des Trennwerkzeugs, d.h. dass direkt am Austrittsbereich des Trennwerkzeugs aus dem Werkobjekt die Späne, Partikel oder dergleichen anderer Schmutz direkt abgesaugt werden.

Zweckmäßigerweise ist vorgesehen, dass zwischen dem Trennwerkzeug und dem beweglichen Abdeckelement ein Freiraum oder Sichtbereich frei bleibt, so dass eine sich in Arbeitsrichtung frontal vor dem Trennwerkzeug erstreckende Anrisslinie sichtbar ist. Beispielsweise ist ein Sichtfenster oder Sichtbereich seitlich zwischen dem Trennwerkzeug und dem Abdeckelement vorgesehen.

Bei dem Handtrenngerät handelt es sich vorzugsweise um einen Trennschleifer, insbesondere einen Winkelschleifer.

Die Abdeckvorrichtung, insbesondere das bewegliche Abdeckelement, befindet sich beim Betrieb des Handtrenngerätes vorteilhaft auf der Oberseite des Werkstücks oder an der Oberseite des Werkstücks.

Die Abdeckvorrichtung kann auch ein von dem Trenngerät separates oder separierbares Bauteil sein, die man auch so definieren kann:
Abdeckvorrichtung für ein freihändig führbares Hand-Trenngerät, das eine Werkzeugaufnahme für ein scheibenförmiges Trennwerkzeug zum Einbringen eines Trennschnittes in ein zu bearbeitendes Werkobjekt und einen in einem Maschinengehäuse angeordneten Antriebsmotor zum Dreh-Antreiben der Werkzeugaufnahme um eine Werkzeugachse aufweist, wobei die Abdeckvorrichtung zum Abdecken des Trennwerkzeugs vorgesehen ist und an dem Maschinengehäuse, insbesondere einem Flanschabschnitt der Werkzeugaufnahme, lösbar montierbar ist und eine beim Betrieb des Trenngeräts am Maschinengehäuse ortsfest festgelegte Seitenrandabdeckung zum Abdecken eines Seitenrands des Trennwerkzeugs umfasst, dadurch gekennzeichnet, dass sie ein relativ zu der Seitenrandabdeckung um eine mit der Werkzeugachse koaxiale oder zu der Werkzeugachse parallele Schwenkachse zwischen einer Abdeckstellung und mindestens einer Offenstellung schwenkbares Abdeckelement zum Abdecken eines vor die ortsfeste Seitenrandabdeckung vorstehenden Arbeitsabschnitts des Seitenrands des Trennwerkzeugs aufweist, wobei das Abdeckelement in der Abdeckstellung einen größeren Teil des Arbeitsabschnitts des Trennwerkzeugs als in der Offenstellung abdeckt und dass an dem Abdeckelement ein Sauganschluss für eine Staubabsaugeinrichtung angeordnet ist.

Erfindungsgemäß ist vorgesehen, dass das Abdeckelement an einem von der ortsfesten Seitenrandabdeckung am weitesten entfernten freien Endbereich durch Anlage an einer Anlagefläche in Arbeitsrichtung frontal vor dem Abdeckelement, in Richtung der Offenstellung betätigbar ist.

Vorteilhaft ist bei der Abdeckvorrichtung vorgesehen, dass das Abdeckelement an einem von der ortsfesten Seitenrandabdeckung am weitesten entfernten freien Endbereich durch Anlage an dem Werkobjekt, insbesondere an dessen Oberseite, in Richtung der Offenstellung betätigbar ist.

Die ortsfeste Seitenrandabdeckung könnte auch ein Bestandteil des Maschinengehäuses sein.

Die Anlagefläche steht beispielsweise vor die Oberseite des Werkobjekts vor. Die Anlagefläche kann ein Bestandteil des Werkobjekts sein.

Es ist möglich, dass das Abdeckelement zunächst manuell über einen Teilabschnitt aus der Abdeckstellung in Richtung der Offenstellung in eine Zwischenstellung zu betätigen ist und anschließend durch Anlage an dem Werkobjekt oder an der frontal in Arbeitsrichtung befindlichen Anlagefläche aus der Zwischenstellung weiter in Richtung der Offenstellung betätigbar ist. In der Zwischenstellung ist eine Anschlagfläche des Abdeckelements zum Anschlagen an dem Werkobjekt oder der Anlagefläche zweckmäßigerweise bereits außerhalb eines Abstands zwischen seiner Schwenkachse und dem Werkobjekt.

Das Abdeckelement schlägt zweckmäßigerweise an der Oberseite des Werkstücks an bzw. ist durch Anlage an der Oberseite des Werkstücks in Richtung der Offenstellung betätigbar.

Es ist erfindungsgemäß vorgesehen, dass das Abdeckelement an einer Anschlagfläche anschlägt, die sich bezogen auf die Arbeitsrichtung frontal vor dem Abdeckelement erstreckt. Gemäß einer Definition des Anspruchs 1 steht diese Anlagefläche nach oben vor die Oberseite oder Oberfläche des Werkstücks, insbesondere rechtwinkelig oder winkelig, vor. Man kann die Anlagefläche auch als Anschlagfläche bezeichnen.

Bevorzugt ist vorgesehen, dass das Abdeckelement durch eine Anlage oder durch Anschlagen an einem insbesondere rechtwinkeligen Innen-Eckbereich des Werkobjekts öffenbar ist.

Es ist möglich, dass an der ortsfesten Seitenrandabdeckung und/oder an dem beweglichen Abdeckelement, zweckmäßigerweise ein Sauganschluss für eine Staubabsaugeinrichtung, beispielsweise einen Staubsauger, angeordnet ist.

Der Antriebsmotor ist zweckmäßigerweise ein elektrischer Antriebsmotor. Das Trenngerät ist als Hand-Werkzeugmaschine ausgestaltet. Das Trenngerät kann netzgebunden betreibbar sein, d.h. dass es beispielsweise ein Anschlusskabel zum Anschluss an ein elektrisches Versorgungsnetz aufweist. Bevorzugt ist auch eine Variante mit Akkubetrieb oder Batteriebetrieb, d.h. dass das Trenngerät beispielsweise eine Akku-Schnittstelle zum Anschluss eines Akkupacks oder einer Batterie aufweist.

Es ist zum Beispiel möglich, dass die ortsfeste Seitenrandabdeckung etwa die Hälfte des von der Abdeckvorrichtung abgedeckten Bereich des Trenngeräts abdeckt, das bewegliche Abdeckelement die andere Hälfte des in der Abdeckstellung abgedeckt Bereichs des Trennwerkzeugs abdeckt. Selbstverständlich könnte das Abdeckelement auch größer sein, d.h. dass es einen größeren Winkelbereich des Trennwerkzeugs in der Abdeckstellung überdeckt als die ortsfeste Seitenrandabdeckung oder umgekehrt ein kleineres Abdeckelement vorgesehen sein, das nur einen kleineren Umfangsbereich des Trennwerkzeugs abdeckt als die ortsfeste Seitenrandabdeckung.

Eine bevorzugte Ausführungsform der Erfindung, die gerade für Schnitte in Innen-Eckbereiche vorteilhaft ist, sieht vor, dass die Abdeckvorrichtung in der Offenstellung des Abdeckelements einen Winkelbereich von etwa oder mindestens 160° freigibt. Besonders bevorzugt ist es, wenn ein noch größerer Winkelbereich frei steht, beispielsweise ein Winkelbereich von etwa 160-180°. Besonders bevorzugt ist ein Winkelbereich von etwa 190°. Der Winkelbereich ist bezogen auf die Drehachse der Werkzeugaufnahme oder des Trennwerkzeugs.

Jedenfalls sieht eine Definition des Anspruchs 1 vor, dass bei geöffneten Abdeckelement bzw. vollständig in die Offenstellung geschwenktem Abdeckelement ein größerer Winkelbereich des Außenumfangs des Trennwerkzeugs zum Eindringen in das Werkobjekt bereitsteht als mindestens 180°.

Es ist weiterhin zweckmäßig, wenn in der Offenstellung oder Offenstellung des Abdeckelements, jedenfalls in der vollständig geöffneten Stellung, in welcher der größte Umfangsbereich des Trennwerkzeugs frei steht, das Trennwerkzeug in einen etwa rechtwinkeligen Innen-Eckbereich des Werkobjekts an beiden Seiten zu mindestens 10%, vorzugsweise 20% oder 30% des Durchmessers des Trennwerkzeugs eindringen kann. Die Eindringtiefe kann aber z.B. an einer Unterseite größer sein, z.B. 20-25 %, insbesondere etwa 22 %, während die frontale Eindringtiefe kleiner ist, z.B. 10-20 %, insbesondere etwa 15 %.

Weiterhin ist es zweckmäßig, wenn in der Abdeckstellung des Abdeckelements zumindest ein Teilbereich des Trennwerkzeugs frei ist, beispielsweise ein Winkelbereich von etwa 45°bis 130°, beispielsweise 90 bis 120 Grad, insbesondere von etwa 110°.

Vorzugsweise ist vorgesehen, dass die Drehrichtung des Trennwerkzeugs derart ausgestaltet ist, dass es das Trennwerkzeug von dem Abdeckelement her zu der ortsfesten Seitenrandabdeckung hin antreibt. Beispielsweise tritt das Trennwerkzeug aus dem Werkobjekt vorne, am freien Endbereich des Abdeckelements aus, wo dann auch gleich die Staubabsaugung stattfindet, d.h. der Sauganschluss angeordnet ist. Der Vorteil ist dabei, dass das Abdeckelement sozusagen mit dem Austrittsbereich aus des Trennwerkzeugs aus dem Werkobjekt mit wandert und zugleich auch der Sauganschluss immer am optimalen Ort, nämlich an dem sozusagen wandernden Austrittsbereich des Trennwerkzeugs vorgesehen ist. Gerade im Zusammenhang mit dem bereits erwähnten Trennschnitt in Innen-Eckbereichen des Werkobjekts ist diese Maßnahme besonders vorteilhaft.

Das Abdeckelement weist beispielsweise an dem freien Endbereich, der am Werkobjekt anschlägt, eine Rolle, eine Gleitfläche, einen Gleitkörper oder dergleichen auf. Zweckmäßig ist auch ein vor das Abdeckelement vorstehender Anschlagvorsprung zum Anschlagen oder zur Anlage an dem Werkobjekt angeordnet. Jedenfalls versorgt dieser freie Endbereich bzw. die daran angeordneten Betätigungskörper (Rolle, Gleitfläche oder dergleichen) dafür, dass das Abdeckelement günstig in Richtung der Offenstellung verstellbar ist. Der Anschlagvorsprung kann auch in der Art eines Auslegers ausgestaltet sein.

Eine Anschlagfläche am freien Endbereich des Abdeckelements oder des Anschlagvorsprungs, die vorteilhaft eine Gleitfläche, eine Rolle oder dergleichen andere Gleitelemente oder bewegliche Elemente umfasst oder als Gleitfläche, Rolle oder bewegliches Element ausgestaltet ist, ist zweckmäßigerweise außerhalb eines Abstands zwischen einerseits der Schwenkachse des Abdeckelements und andererseits dem Werkobjekt oder einer zur Führung an dem Werkobjekt vorgesehenen Führungsfläche, beispielsweise einem Führungstisch, der Hand-Werkzeugmaschine oder der Abdeckvorrichtung angeordnet, sodass das Abdeckelement selbsttätig durch Anschlagen an dem Werkobjekt oder der frontal in Arbeitsrichtung vorn liegenden Anlagefläche in Richtung der Offenstellung betätigbar ist. Die Anschlagfläche kann ein Drehmoment auf das Abdeckelement in Richtung der Offenstellung ausüben.

Bevorzugt ist das Abdeckelement in Richtung der Abdeckstellung angefedert, beispielsweise durch eine Federanordnung. Besonders bevorzugt erstreckt sich die Federanordnung an einem Innenumfang der ortsfesten Seitenrandabdeckung. Es ist aber auch möglich, dass die Federanordnung eine Feder umfasst, die ihnen am Abdeckelement oder außen am Abdeckelement angeordnet ist und sich am Maschinengehäuse oder der ortsfesten Seitenrandabdeckung abstützt.

Die Abdeckvorrichtung ist zweckmäßigerweise fixierbar, wofür eine Fixiereinrichtung vorgesehen ist. Die Fixiereinrichtung umfasst beispielsweise eine Rasteinrichtung, d.h. einen Rastvorsprung und eine Rastaufnahme, bevorzugt angefedert. Auch eine Klemmeinrichtung, eine Klinke oder dergleichen sind vorteilhaft anwendbar. Die Fixiereinrichtung dient zum Fixieren des Abdeckelements relativ zu der ortsfesten Seitenrandabdeckung, beispielsweise in der Abdeckstellung oder der Offenstellung oder auch dazwischen liegenden Stellung. Die Fixiereinrichtung ist zwischen einer das Abdeckelement relativ zur ortsfesten Seitenrandabdeckung freigebenden Lösestellung und einer das Abdeckelement gegenüber der Seitenrandabdeckung festlegenden Fixierstellung verstellbar. Beispielsweise ist eine Rastklinke in der entsprechenden Fixierstellung fixierbar. Die Rastklinke oder die sonstige Rasteinrichtung ist zweckmäßigerweise in Richtung der Fixierstellung angefedert, wofür eine Federanordnung vorgesehen ist.

Die Fixiereinrichtung ist vorzugsweise in Richtung der Fixierstellung angefedert, d.h. dass beispielsweise eine Fixierelement durch eine Federanordnung in Richtung der Fixierstellung belastet ist.

Die Fixiereinrichtung ist zweckmäßigerweise ausschließlich in der Abdeckstellung in die Fixierstellung verstellbar. In der Abdeckstellung ist, wie gesagt, vorzugsweise ein Teilbereich des Trennwerkzeugs für einen Trennschnitt frei, das heißt es kann in das Werkobjekt eingeführt werden und dort Trennschnitte durchführen. Der Vorteil ist dabei, dass der freie Endbereich des Abdeckelements bei fixierter Fixiereinrichtung gleichzeitig eine Führungsfunktion erfüllen kann, d.h. er kann sich an dem Werkobjekt abstützen, um das Trennwerkzeug für einen mit konstanter Tiefe durchgeführten Trennschnitt zu führen.

Die Fixiereinrichtung ist zweckmäßigerweise durch einen an einer feststehenden Komponente des Trenngeräts beweglich gelagertes Hand-Betätigungselement betätigbar, welches in einer der Lösestellung zugeordneten Position weiter vor die feststehende Komponente des Trenngeräts vorsteht als in der Fixierstellung. Bei der feststehenden Komponente handelt es sich beispielsweise um einen Bestandteil der Abdeckvorrichtung, besonders bevorzugt um die ortsfeste Seitenrandabdeckung. Der Vorteil dieser Konfiguration ist es, dass eine Entriegelung oder ein Lösen der Fixierung durch einen aktiven Bedienereingriff geschieht, d.h. dass dieser das Hand-Betätigungselement, zum Beispiel einen Betätigungsarm, eine Klinke oder dergleichen, sozusagen von der festen Komponente weg verstellen muss. Wenn beim Arbeitsbetrieb, beispielsweise durch eine unbedachte Bedienhandlung, durch eine Anlage an einem Widerlagerobjekt oder dergleichen, ein Druck auf das Hand-Betätigungselement ausgeübt wird, führt dies nicht zur Entriegelung des Abdeckelements bzw. zum Lösen der Fixiereinrichtung.

Eine vorteilhafte Maßnahme sieht vor, dass das Abdeckelement ausschließlich über ein Schiebelager an der ortsfesten Seitenrandabdeckung um eine um die Schwenkachse verlaufende gekrümmte Bahn, insbesondere eine Kreisbahn, verschieblich gelagert ist, also ohne ein Drehlager nahe bei der Werkzeugachse, ohne eine Lagerwelle oder einen Lagerbolzen oder dergleichen. Im Bereich der Schwenkachse ist dann keine Schwenklagereinrichtung vorhanden.

An dieser Stelle sei bemerkt, dass die Schwenkbewegung des Abdeckelements nicht zwingend entlang einer Kreisbahn sein muss, sondern auch entlang einer anderweitig gekrümmten Bahn verlaufen kann.

Die Abdeckvorrichtung weist zweckmäßigerweise eine Montageöffnung auf, durch welche die Werkzeugaufnahme für einen Wechsel des Trennwerkzeugs zugänglich ist. Die Montageöffnung kann beispielsweise so bemessen sein, das eine Befestigungsmutter oder dergleichen für das Werkzeug lösbar oder verschließbar ist. Die Montageöffnung kann in der Art eines Fensters ausgestaltet sein.

Besonders bevorzugt ist es, wenn die Montageöffnung großflächig ist, das heißt dass sie einem Durchmesser des Trennwerkzeugs entspricht. Das Trennwerkzeug kann durch die Montageöffnung von dem Trenngerät entfernt werden oder daran montiert werden, ohne dass eine weitere Komponente der Abdeckvorrichtung geöffnet werden muss.

Eine bevorzugte Ausführungsform sieht vor, dass das Abdeckelement oder die ortsfeste Seitenrandabdeckung oder beide ausschließlich den Seitenrand des Trennwerkzeugs abdecken. Besonders bevorzugt wird nur der radial äußere Randbereich des Trennwerkzeugs abgedeckt. Dabei ist es sogar möglich, dass zwischen dem radial äußeren Außenumfang des Trennwerkzeugs und einem nach radial innen vorstehenden Bereich des Abdeckelements oder der Seitenrandabdeckung oder beiden noch ein Abstand vorhanden ist, was eine besonders bequeme Demontage des Trennwerkzeugs von der Werkzeugaufnahme oder Montage oder an die Werkzeugaufnahme ermöglicht.

Eine zweckmäßige Ausführungsform der Erfindung sieht vor, dass das Abdeckelement und/oder die ortsfeste Seitenrandabdeckung ganz oder teilweise aus transparentem Material, zum Beispiel transparenten Kunststoff bestehen. Somit kann der Bediener den Arbeitsbereich des Trennwerkzeugs gut einsehen.

Es ist aber auch möglich, dass das bewegliche Abdeckelement und/oder die ortsfeste Seitenrandabdeckung aus nicht transparenten Material bestehen, zum Beispiel aus Metall oder einem entsprechend eingefärbtem Kunststoff. Es ist weiterhin denkbar, dass nur Teilbereiche aus transparentem, optisch durch lässige Material bestehen, das heißt beispielsweise der vordere, freie Endbereich des Abdeckelements durchsichtig ist, so dass der Bediener beispielsweise einen Austrittsbereich bzw. einen Arbeitsbereich des Trennwerkzeugs, dort wo dieses aus dem Werkobjekt austritt oder in das Werkobjekt eintritt, gut sehen kann.

Aber auch bei nicht transparentem Material kann das Abdeckelement ohne weiteres so ausgestaltet werden, dass ein Eintrittsbereich oder Austrittsbereich des Trennwerkzeugs gut einsehbar ist. Beispielsweise weist das Abdeckelement einen solchen Abstand zu einer Flachseite des Trennwerkzeugs auf, beispielsweise etwa 1 cm, 2 cm oder 3 cm (Zwischenbereiche sind möglich), dass der Austrittsbereich oder Eintrittsbereich und insbesondere ein in Arbeitsrichtung dem Austrittsbereich oder Eintrittsbereich vorgelagerter Bereich des Werkobjekts für einen Bediener zumindest schräg von der Flachseite des Trennwerkzeugs her einsehbar ist. Somit kann beispielsweise eine Anrisslinie gut gesehen werden.

Vorteilhafte Weiterbildungen der bereits erläuterten Erfindung oder Erfindungen sehen besondere Ausgestaltungen von Führungsflächen vor. Derartige Ausgestaltungen von Führungsflächen können auch an sich eigenständige Erfindungen bilden.

Eine Ausführungsform der Erfindung kann vorsehen, dass das Trenngerät keine sich neben der Abdeckvorrichtung am Maschinengehäuse angeordnete Führungsfläche zur Führung an einem Untergrund, beispielsweise einer Führungsschiene, aufweist. Beispielsweise ist keine Führungsplatte vorhanden.

Eine Ausführungsform der Erfindung kann auch vorsehen, dass eine relativ schmale oder kleine Führungsplatte vorgesehen ist. Diese kann in einem Ausführungsfall nur an einem von dem Abdeckelement am weitesten entfernten Winkelabschnitt, beispielsweise an einem freien Endbereich, der ortsfesten Seitenrandabdeckung vorgesehen sein.

Diese Führungsfläche ist vorzugsweise die einzige Führungsfläche.

Es ist aber auch möglich, dass sich neben dem Maschinengehäuse eine weitere Führungsfläche oder die entsprechend größere Führungsfläche erstreckt. Bevorzugt bildet die Führungsfläche einen Teil der Abdeckeinrichtung. Beispielsweise ist an der ortsfesten Seitenrandabdeckung der Abdeckvorrichtung eine Führungsplatte vorgesehen.

Das freie Arbeiten in Innen-Eckbereiche des Werkobjekts hinein wird durch folgende Maßnahme erleichtert. Diese Ausführungsform der Erfindung, die auch eine eigenständige Erfindung im Zusammenhang mit dem Oberbegriff des Anspruchs 1 darstellen kann, sieht zweckmäßigerweise vor, dass am Maschinengehäuse eine oder mehrere ortsfeste Führungsflächen, beispielsweise in der Art einer Führungsplatte oder mehrerer Führungsplatten, vorgesehen sind. Die mindestens eine Führungsfläche, beispielsweise an einer Führungsplatte, kann am Maschinengehäuse selbst vorgesehen sein und/oder zweckmäßigerweise einen Bestandteil der Abdeckvorrichtung bilden. Allerdings erstrecken sich diese Führungsflächen oder die Führungsfläche gemäß einer Definition des Anspruchs 1 in Arbeitsrichtung nach vorn bis maximal zu einem Bereich des Trennwerkzeugs hin, der nicht von dem Abdeckelement freigegeben werden kann. Beispielsweise sind in Arbeitsrichtung nach vorn Führungsflächen nur bis maximal zur Drehachse bzw. Werkzeugaufnahme vorgesehen. Dadurch ist noch immer eine günstige Führung des Trenngeräts am Untergrund möglich. Ein Trennschnitt in eine Innenecke hinein ist jedoch durch die Führungsplatte oder die Führungsflächen nicht behindert.

Im Sinne eines freihändigen Arbeitens und einer bequemen Handhabung der Maschine bzw. des Trenngeräts ist es auch, wenn die Werkzeugaufnahme und die Abdeckeinrichtung an einem freien Endbereich des Maschinengehäuses angeordnet sind.

Das Maschinengehäuse steht beispielsweise in der Art eines Armes von der Werkzeugaufnahme bzw. dem Trennwerkzeug ab. Bevorzugt ist das Maschinengehäuse in der Art eines mit einer Hand umgreifbaren Handgriffes ausgestaltet. Es ist aber auch möglich, dass das Maschinengehäuse einen solchen Handgriff aufweist, das heißt ein Handgriff am ansonsten nicht direkt umgreifbaren Maschinengehäuse vorgesehen ist.

Besonders bevorzugt ist es, wenn das Maschinengehäuse in der Art eines als Handgriff dienenden Haltearms für das Trennwerkzeug ausgestaltet ist. Der Bediener kann also beispielsweise mit einer Hand das Maschinengehäuse umgreifen, wobei dann sozusagen am Kopf oder freien Endbereich des Maschinengehäuses das Trennwerkzeug und die Abdeckvorrichtung vorgesehen sind.

Es ist zwar prinzipiell möglich, dass das Trenngerät für eine Art ziehenden Schnitt verwendet wird, d.h. dass ein in Arbeitsrichtung vorderer Endbereich des Trennwerkzeugs in das Werkobjekt einschneidet, sich das Trennwerkzeug oder Schneidplatte sozusagen durch das Werkobjekt hindurch arbeitet und dann hinten, im Bereich der ortsfesten Seitenrandabdeckung aus dem Werkobjekt austritt. In diesem Fall ist es zweckmäßig, wenn hinten am ortsfesten Teil der Abdeckvorrichtung, nämlich im Bereich der ortsfesten Seitenrandabdeckung, der Sauganschluss vorgesehen ist.

Besonders bevorzugt ist jedoch die umgekehrte Arbeitsrichtung, d.h. dass gemäß einer Definition des Anspruchs 1 ein so genannter schiebender Schnitt mit dem Trenngerät in das Werkobjekt vorgenommen wird. Gemäß dieser Definition des Anspruchs 1 ist vorgesehen, dass der Antriebsmotor die Werkzeugaufnahme in einer Drehrichtung antreibt, bei der das Trennwerkzeug vorn im Bereich des Abdeckelements aus dem Werkobjekt austritt und sozusagen unter das Abdeckelement hinein unter die Abdeckvorrichtung hinein dreht. Dort, am Abdeckelement, befindet sich dann zweckmäßigerweise auch der Sauganschluss.

Bevorzugt ist der die Werkzeugaufnahme aufweisende Abschnitt des Maschinengehäuses in einer Arbeitsrichtung des Trenngeräts vorn, so dass das Trenngerät für einen schiebenden Trennschnitt ausgestaltet ist. Das Maschinengehäuse steht dabei zweckmäßigerweise nach schräg hinten (in der Arbeitsposition bzw. beim Trenn-Schneiden in das Werkobjekt) von der Werkzeugaufnahme ab.

Nachfolgend wird ein Ausführungsbeispiel der Erfindung anhand der Zeichnung erläutert. Es zeigen:
- Figur 1: eine perspektivische Schrägansicht eines erfindungsgemäßen Hand-Trenngeräts bei einem Schnitt in eine ebene Oberfläche eines Werkobjekts,
- Figur 2: das Hand-Trenngerät gemäß Figur 1, jedoch von der anderen Seite,
- Figur 3: das Hand-Trenngerät gemäß der vorstehenden Figuren, beim Beginn eines Schnittes in eine Innenecke eines anderen Werkobjekts,
- Figur 4: das Hand-Trenngerät gemäß Figur 3, jedoch bei weiter fortgeschrittenen Schnitt,
- Figur 5: das Hand-Trenngerät gemäß Figuren 3, 4 bei vollständigem Schnitt in die Innenecke,
- Figur 6: das Hand-Trenngerät gemäß Figur 5, jedoch von der anderen Seite her,
- Figur 7: eine Fixiereinrichtung des Hand-Trenngeräts, etwa entsprechend einem Detail X in Figur 2,
- Figur 8: das Hand-Trenngerät gemäß der vorstehenden Figuren ohne Trennwerkzeug und mit seinem Abdeckelement in der Abdeckstellung,
- Figur 9: das Hand-Trenngerät gemäß Figur 8, jedoch mit vollständig in die Offenstellung geschwenktem Abdeckelement, und
- Figur 10: das Hand-Trenngerät von schräg vorn mit teilweise geschnitten dargestelltem Sauganschluss.

Ein Hand-Trenngerät 10 weist ein Maschinengehäuse 11 auf, in welchem ein Antriebsmotor 12, beispielsweise ein elektrischer Antriebsmotor, aufgenommen ist. Das Maschinengehäuse 11 weist einen Handgriffabschnitt 13 auf, der von einem Bediener umgriffen werden kann. An einer Seite des Maschinengehäuses 11, nahe bei einem Kopf 14, ist beispielsweise ein Schalter 17 zum Einschalten und/oder Ausschalten des Antriebsmotors 12 vorgesehen. Von dem Maschinengehäuse 11, beispielsweise dessen Kopf 14, steht ein Handgriff 15 seitlich ab. Mithin kann also ein Bediener das Trenngerät 10 einerseits am Handgriffabschnitt 13, andererseits am seitlich abstehenden Handgriff 15 mit zwei Händen ergreifen und sicher führen.

Der Antriebsmotor 12 treibt direkt oder über ein Getriebe 16, beispielsweise ein sogenanntes Winkelgetriebe, eine Werkzeugaufnahme 18 an, an der ein Trennwerkzeug 19 lösbar befestigbar ist. Am Handgriffabschnitt 13 ist ein Netzkabel 20 angeordnet, so dass das Hand-Trenngerät 10 beispielsweise über ein elektrisches Versorgungsnetz, beispielsweise mit 120-230 V Wechselspannung betrieben werden kann. Alternativ wäre aber auch ein Akku-Hand-Trenngerät ohne weiteres möglich, d.h. ein Hand-Trenngerät, das einen Energiespeicher an Bord hat.

Das Maschinengehäuse 11 weist nahe bei der Werkzeugaufnahme 18 einen Führungskörper 21 auf, beispielsweise eine Führungsplatte 22, mit dem das Hand-Trenngerät 10 an einem Untergrund, beispielsweise an einem Werkobjekt W1, beispielsweise einem Stein, einer Fliese oder dergleichen, entlang geführt werden kann.

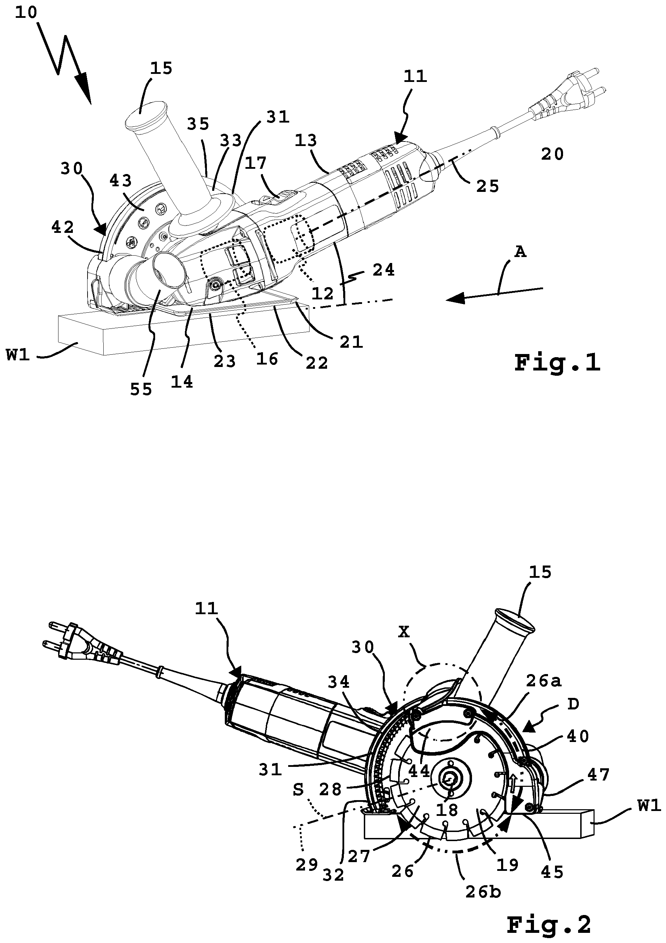

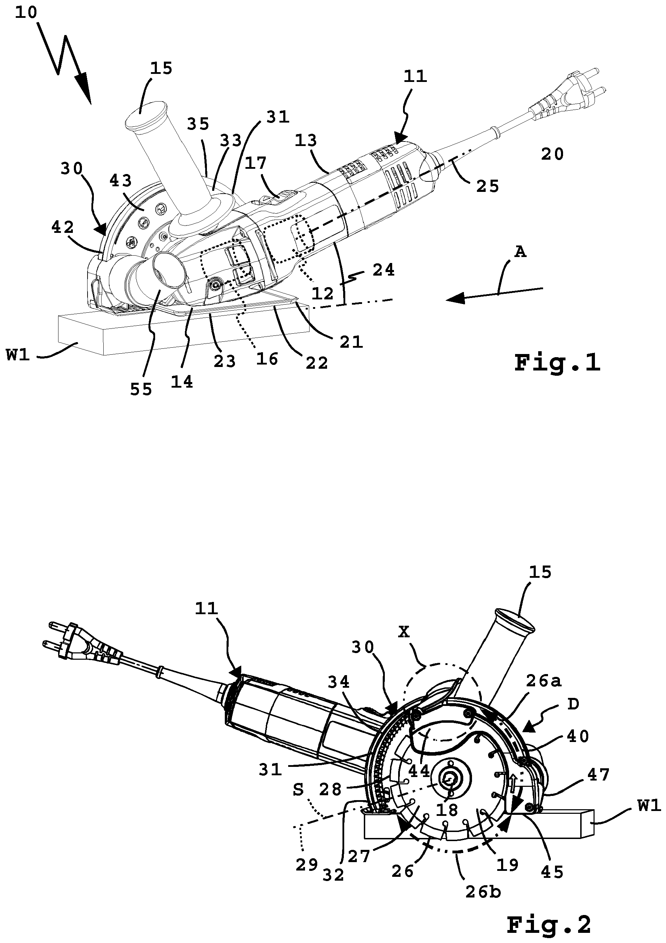

Das Trennwerkzeug 19 bringt dabei einen beispielsweise in Figur 2 angedeuteten Trennschnitt in das Werkobjekt W1 ein.

Der Führungskörper 21 erstreckt sich unterhalb des Kopfes 14 und hat eine Führungsfläche 23, die in einem Winkel 24 zu einer Längsachse 25 des Handgriffabschnitts 13 steht. Der Führungstisch oder Führungskörper 21 ist beispielsweise unmittelbar am Maschinengehäuse 11 angeordnet, wobei es zweckmäßig ist, den Winkel 24 einstellbar auszugestalten, so dass der Bediener eine ergonomisch günstige Winkelstellung des Handgriffabschnitts 13 zu der Führungsfläche 23 einstellen kann.

Vorteilhaft ist eine Konfiguration dahingehend, dass der Führungskörper 21 einen Bestandteil einer Abdeckvorrichtung 30 bildet, die fest am Maschinengehäuse 11 befestigt ist oder lösbar an dem Maschinengehäuse 11 befestigbar ist, beispielsweise im Bereich der Werkzeugaufnahme 18 montiert werden kann.

Die Abdeckvorrichtung 30 weist eine bezüglich des Maschinengehäuses 11 ortsfest festgelegte Seitenrandabdeckung 31 auf, die sich über einen Außenumfang 26 des Trennwerkzeugs 19 hinweg erstreckt und einen vorbestimmten Winkelbereich des Trennwerkzeugs 19 überdeckt.

Die feste Seitenrandabdeckung 31 befindet sich neben dem Handgriffabschnitt 13. Die feste Seitenrandabdeckung 31 stützt also den Bediener vor Verletzungen durch das Trennwerkzeug 19.

Die Seitenrandabdeckung 31 überdeckt einen Seitenrand 28 des Trennwerkzeugs 19. Die feste Seitenrandabdeckung 31 erstreckt sich im Wesentlichen nur über den Außenumfang 26 des Trennwerkzeugs 19, während eine vom Maschinengehäuse 11 abgewandte Seitenfläche 27 des Trennwerkzeugs im Wesentlichen frei steht. Allerdings ist dort die Verletzungsgefahr deutlich geringer, weil der Bediener in aller Regel den Handgriffabschnitt 13 und den Handgriff 15 ergreift und somit gar nicht erst in Gefahr kommt, in die am Außenumfang 26 befindlichen Schneidelemente, Klingen oder dergleichen, zu fassen.

Die Führungsplatte 22 erstreckt sich unterhalb des Kopfes 14 sowie nach hinten zum Handgriff 15 (hinten in Bezug auf die Arbeitsrichtung A). Die Führungsplatte 22 erstreckt sich weiterhin unter einen hinteren Endabschnitt 32 der Seitenrandabdeckung 31, so dass diese in Arbeitsrichtung A hinten am Werkobjekt W1 abgestützt ist. Zugleich ist selbstverständlich auch der hintere Bereich des Maschinengehäuses 11, nämlich der Handgriffabschnitt 13, auf diesem Wege am Werkobjekt W1 geführt und abgestützt.

Die Seitenrandabdeckung 31 weist weiterhin eine von einer Deckwand 35 abstehende Seitenwand 33 auf, die eine zu der Seitenfläche 27 entgegengesetzte Seitenfläche des Trennwerkzeugs 19 abdeckt, mithin also dieses gegenüber dem Maschinengehäuse 11 und somit dem Handgriffabschnitt 13 abdeckt. Die Verletzungsgefahr ist dadurch sehr gering. Im Bereich des Außenumfangs 26 bzw. des Seitenrands 28 des Trennwerkzeugs 19 ist die Seitenrandabdeckung 31 etwa U-förmig, weist also einen sich zu der Seitenfläche 27 hin erstreckenden kurzen Abdeckschenkel 34 auf.

Die Abdeckvorrichtung 30 weist weiterhin ein bewegliches Abdeckelement 40 auf, welches relativ zu dem ortsfesten Teil der Abdeckvorrichtung 30, nämlich der Seitenrandabdeckung 31, vorliegend schwenkbar ist, nämlich um die Werkzeugachse 29, die zugleich die Schwenkachse S des Abdeckelements 40 definiert.

Das Abdeckelement 40 schützt in einer in den Figuren 1-3 dargestellten Abdeckstellung D einen sich neben dem durch die Seitenrandabdeckung 31 abgedeckten Umfangsbereich des Trennwerkzeugs 19, nämlich einen Abschnitt 26a, des Außenumfangs 26.

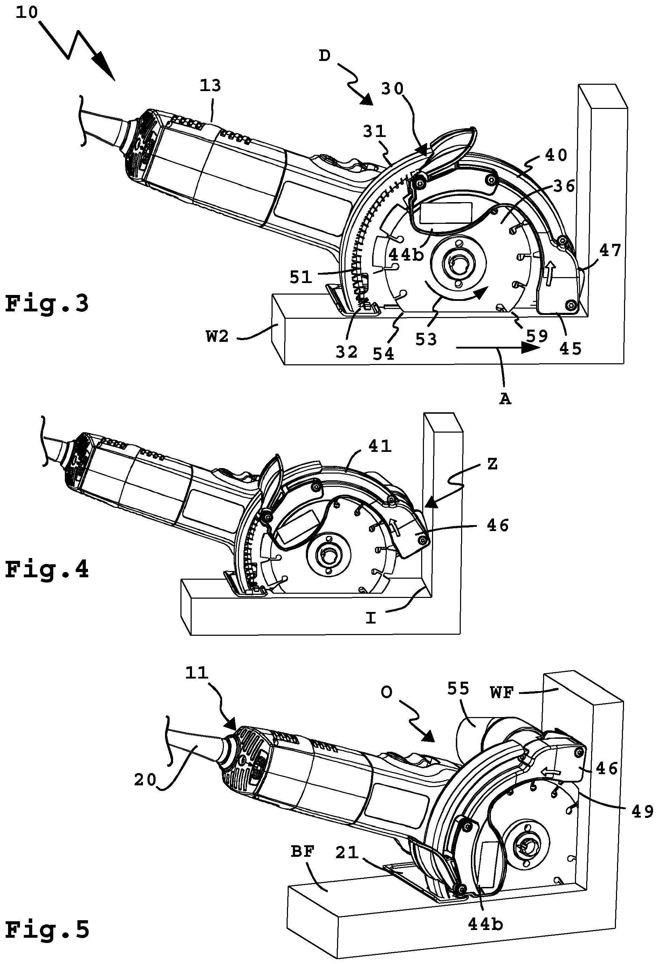

Das Abdeckelement 40 kann um die Schwenkachse S in Richtung des ortsfesten Teils der Abdeckvorrichtung 30, nämlich der Seitenrandabdeckung 31 verschwenkt werden, was in Figur 4 teilweise und in Figur 5 vollständig geschehen ist. Dann nimmt das Abdeckelement 40 eine Offenstellung O ein, in welcher ein größerer Bereich des Außenumfangs 26 des Trennwerkzeugs 19 freigegeben ist, beispielsweise ein Winkelbereich von etwa 190°.

Es ist möglich, dass das Abdeckelement 40 zunächst manuell aus der Abdeckstellung D in eine Zwischenstellung Z zu bringen ist, beispielsweise entsprechend der Stellung in Figur 4, bevor es durch Anlage an einer Oberseite des Werkobjekts und/oder beispielsweise in Arbeitsrichtung A frontal vorn befindlichen Anlagefläche oder Wandfläche WF weiter, insbesondere vollständig, in Richtung der Offenstellung O verstellbar ist. Für diesen Bewegungsabschnitt ist kein Bedienereingriff mehr notwendig. Vorliegend ist die Wandfläche WF ein Bestandteil des Werkobjekts W1. Sie könnte aber auch eine vom Werkobjekt separate Anlagefläche oder Anschlagfläche sein.

In diesem Zusammenhang sei bereits bemerkt, dass selbst in der Abdeckstellung D nicht der gesamten Außenumfang 26 des Trennwerkzeugs 19 abgedeckt ist, sondern beispielsweise ein Umfangsbereich 26b von etwa 90-110° des Außenumfangs 26 frei steht und somit zum Trennen des Werkobjekts W1 nutzbar ist.

In der Offenstellung O ist der Umfangsbereich 26b und zudem auch der Abschnitt 26a freigegeben. An dieser Stelle sei bemerkt, dass bei den bisherigen Ausführungen die Offenstellung O sozusagen die maximale Offenstellung ist, die Abdeckstellung D sozusagen die maximale Schließstellung und dementsprechend zwischen diesen beiden maximalen Positionen zahlreiche Zwischenpositionen, beispielsweise durch eine Verrastung festgelegte Zwischenpositionen, oder besonders bevorzugt stufenlos einstellbare Zwischenpositionen möglich sind. Man erkennt das insbesondere im Zusammenhang mit den Figuren 3-5, wo das Abdeckelement 40 kontinuierlich zwischen der Abdeckstellung D und der Offenstellung O schwenkt.

Das Abdeckelement 40 weist einen Abdeckkörper 41 auf, der im Querschnitt etwa U-förmig ist. Mithin ist also eine Deckwand 42 vorgesehen, die sich am radialen Außenumfang 26 des Trennwerkzeugs 19 befindet und von der Seitenschenkel 43, 44 abstehen. Der Seitenschenkel 44 dient zur Abdeckung der Freien Seitenfläche 27 des Trennwerkzeugs 19, der andere Seitenschenkel 43 bildet eine Abdeckwand und erstreckt sich neben der Seitenwand 33 der ortsfesten Seitenrandabdeckung 31 und deckt die zu der Seitenfläche 27 entgegengesetzte Seitenfläche des Trennwerkzeugs 19 ab.

An einem vorderen, freien Endbereich 45 des Abdeckelements 40 ist ein Anschlagkörper 46 vorgesehen. Der Anschlagkörper 46 hat beispielsweise einen Anschlagvorsprung 47, der beim Anschlagen an einer Innenecke I eines Werkobjekts W2, dargestellt beispielsweise in den Figuren 3-5, das Abdeckelement 40 aus der Abdeckstellung D in Richtung der Offenstellung O betätigt, siehe dazu Figur 4. Dabei gleitet der Anschlagvorsprung 47, an dem eine Gleitfläche, Walze, Rolle oder dergleichen angeordnet sein kann, beispielsweise an einer Anschlagfläche oder Anlagefläche, insbesondere einer Wandfläche WF des Werkobjekts W2, entlang, wodurch das Abdeckelement 40 zum Schwenken um die Schwenkachse S angetrieben wird.

Die Eindringtiefe des Trennwerkzeugs 19 ist beispielsweise im Bereich des einen Schenkels des Werkobjekts W2, beispielsweise der Bodenfläche BF, etwa 20-25 % des Durchmessers des Trennwerkzeugs 19, konkret beispielsweise etwa 21-23 % oder 22 %. In die Wandfläche WF hingegen dringt das Trennwerkzeug 19 etwas weniger tief, jedoch noch immer mindestens etwa 10-20 %, vorliegend etwa 13-17 %, insbesondere etwa 15 % des Durchmessers des Trennwerkzeugs 19 ein.

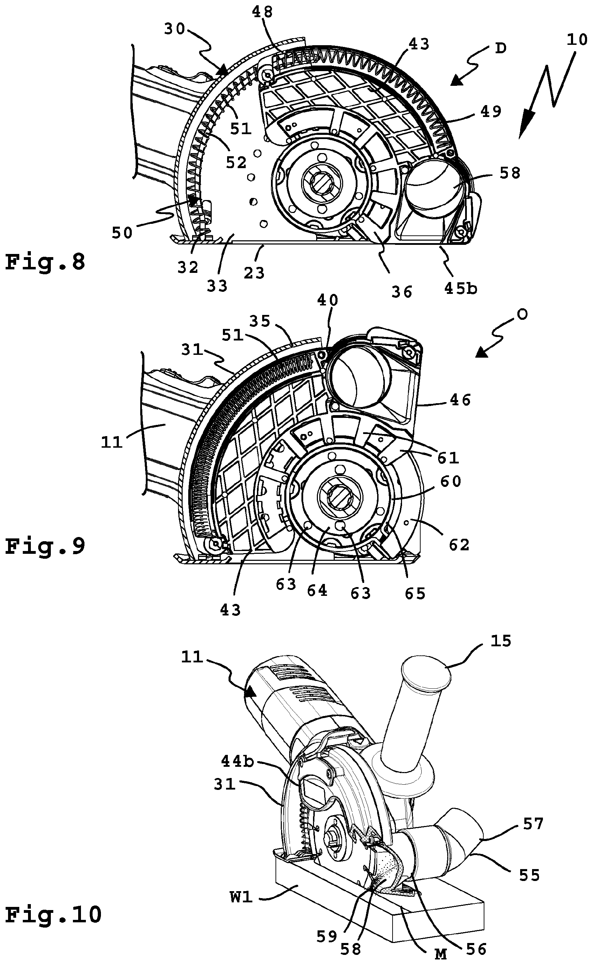

In Richtung der Abdeckstellung D wird das im Abdeckelement 40 durch eine Federanordnung 50 mit einer Feder 51 geschwenkt bzw. betätigt. Die Feder 51 ist durch einen Führungskörper 52 geführt, beispielsweise um einen Dorn, der sich unterhalb der ortsfesten Seitenrandabdeckung 31 bogenförmig erstreckt und somit die Feder 51 quasi in eine Kreisbahn zwingt. Der Führungskörper 52 hat einen gekrümmten Verlauf und erstreckt sich zwischen dem neben der Führungsplatte 22 befindlichen Endbereich der Seitenrandabdeckung 31 und einem zu dem Endbereich 45 entgegengesetzten Endbereich 48 des Abdeckelements 40. Die Feder 51 hingegen kann sich über den Endbereich 48 hinaus in einen Aufnahmekanal 49 des Abdeckelements 40 hinein erstrecken, wenn sich das Abdeckelement 40 in der Abdeckstellung D befindet (Figur 8). Jedenfalls ist die Feder 51 am anderen Endbereich 45 des Abdeckelements 40 abgestützt. Wenn also das Abdeckelement 40 aus der Abdeckstellung D in Richtung der Offenstellung O verstellt wird, wird die Feder 51 im Innenraum des Aufnahmekanals 49 komprimiert und gespannt.

Die Werkzeugaufnahme 18 und somit das Trennwerkzeug 19 hat einen Drehrichtung 53 derart, dass es aus der ortsfesten Seitenrandabdeckung 31 heraus in Richtung des beweglichen Abdeckelements 40 dreht. Zweckmäßigerweise ist vorgesehen, dass beim Trennen des Werkobjekts W1 oder W2 entstehende Partikel in einem Austrittsbereich 59 des Trennwerkzeugs 19 aus dem Werkobjekt W1 oder W2 heraus in Richtung des Endbereichs 45 des beweglichen Abdeckelements 40 sozusagen geschleudert werden.

Am Endbereich 45 ist weiterhin ein Sauganschluss 55 vorgesehen, an den eine Staubsaugereinrichtung, beispielsweise ein Saugschlauch eines Staubsaugers, anschließbar ist. Der Sauganschluss 55 umfasst einen Rohrkörper 56, der in den Innenraum des Abdeckelements 40, also zum Trennwerkzeug 19 hin, mit einer Öffnung 58 offen ist. Am Rohrkörper 56 ist ein winkeliger Rohrkörper 57 angeordnet, vorzugsweise drehbar, so dass ein gegebenenfalls am Sauganschluss 55 angeschlossener Absaug-Schlauch eine gewisse Beweglichkeit hat.

Man erkennt insbesondere aus Figur 8, dass die Öffnung 58 vorn am Endbereich 45 angeordnet ist, so dass im Austrittsbereich 59 des Trennwerkzeugs 19 aus dem Werkobjekt W1 oder W2 austretender Staub direkt in die Öffnung 58 eingesaugt werden kann, mithin also beispielsweise eine Anrisslinie M frei und sichtbar gehalten ist.

Ein Vorteil der Anordnung des Sauganschlusses 55 direkt am vorderen, freien Endbereich 45 des Abdeckelements 40 ist darin zu sehen, dass sozusagen die Absaugung stets vor Ort, dort wo der Trennschnitt stattfindet, gegeben ist. Man erkennt das insbesondere in Figur 5 oder 10, wo der Austrittsbereich 59 von Staub oder dergleichen aus dem Werkobjekt W1 auch bei einem Schnitt in eine Innenecke I direkt am Sauganschluss 55 ist.

Weiterhin ist vorteilhaft zwischen dem Abdeckelement 40 und dem Trennwerkzeug 19 noch ein solcher Abstand oder Sichtbereich vorhanden, dass die Anrisslinie M frontal in Arbeitsrichtung A vor dem Trennwerkzeug 19 sichtbar ist.

Die Seitenrandabdeckung 31 und das Abdeckelement 40 lassen eine verhältnismäßig große Montageöffnung 36 frei, durch die hindurch das Trennwerkzeug 19 an der Werkzeugaufnahme 18 montierbar bzw. von der Werkzeugaufnahme 18 demontierbar ist. Der Abdeckschenkel 34 ist ebenso wie der Seitenschenkel 44 zur Werkzeugaufnahme 18 hin oder in radialer Richtung zur Werkzeugachse 29 hin verhältnismäßig kurz. Der Bediener muss allenfalls das Trennwerkzeug 19 etwas unter einen nach unten vorstehenden Bereich 44b des Seitenschenkels 44 schieben, um es dann an der Werkzeugachse bzw. der Werkzeugaufnahme 18 bequem befestigen zu können.

Der vorstehende Bereich 44b ermöglicht z.B. einen besseren Schutz des Bedieners, wenn dieser den Handgriff 15 umgreift und gegebenenfalls etwas abrutscht, d.h. in Richtung des Trennwerkzeugs 19 gelangen könnte.

Das bewegliche Abdeckelement 40 schwenkt in Richtung der Offenstellung O zu dem festen Abschnitt, nämlich der Seitenrandabdeckung 31, hin und gelangt dabei unter die Deckwand 35. Mithin schwenkt also das bewegliche Abdeckelement 40 unter die Seitenrandabdeckung 31.

Der Seitenschenkel 43, der wandartig ausgestaltet ist, ist beispielsweise an einer Drehlagerfläche 60 drehbar gelagert. Beispielsweise stützen sich Arme 61, die vom Seitenschenkel 43 nach radial innen bzw. in Richtung der Werkzeugaufnahme 18 abstehen, stirnseitig oder mit ihren freien Endbereichen ein der Drehlagerfläche 60 ab. Die Drehlagerfläche 60 ist beispielsweise ein zylindrischer Außenumfang eines Drehlagerkörpers 65. Beispielsweise sind an den freien Endbereichen Rollen oder Gleitflächen vorgesehen. Es ist auch möglich, dass die Arme 61 beispielsweise einen ringförmigen Körper 62 des ortsfesten Abschnittes der Abdeckvorrichtung 30, beispielsweise der Seitenrandabdeckung 31, umgreifen oder an diesem drehbar gelagert sind. Beispielsweise ist der ringförmige Körper 62 ein Bestandteil der Seitenwand 33 oder mit dieser verbunden.

Der ortsfeste Teil der Abdeckvorrichtung 30, beispielsweise die Seitenwand 33, ist vorzugsweise an das Maschinengehäuse 11 angeschraubt, beispielsweise mit Schrauben 63, und/oder ist an einen Flansch 64, der die Werkzeugaufnahme 18 umgibt, angeklemmt oder an diesen angeschraubt oder in sonstiger Weise mit diesem verbunden. Jedenfalls ist es vorteilhaft, wenn die Abdeckvorrichtung 30 lösbar vom Maschinengehäuse 11 ausgestaltet ist, bei Bedarf also entfernt oder gegen eine andere Abdeckvorrichtung ausgetauscht werden kann.

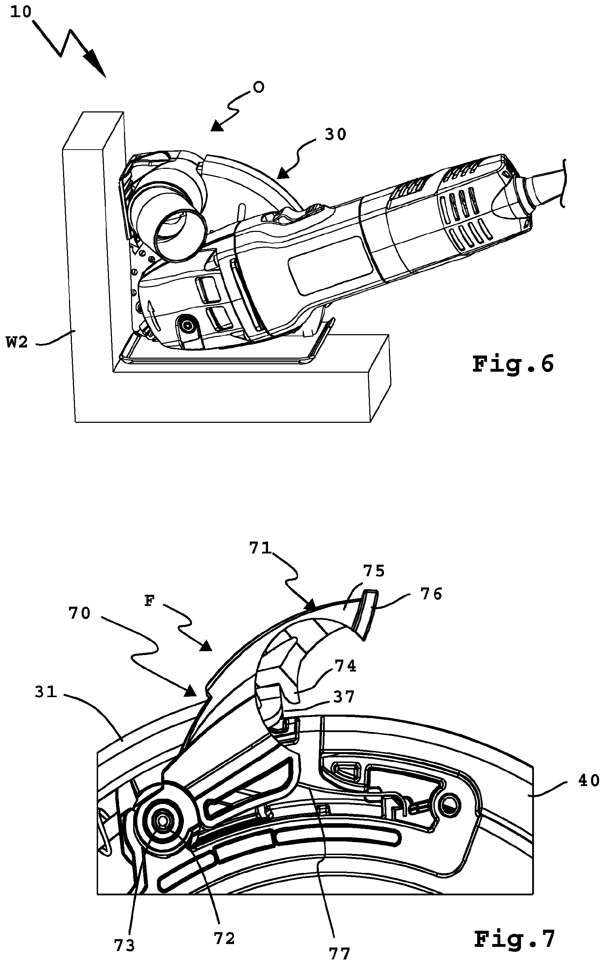

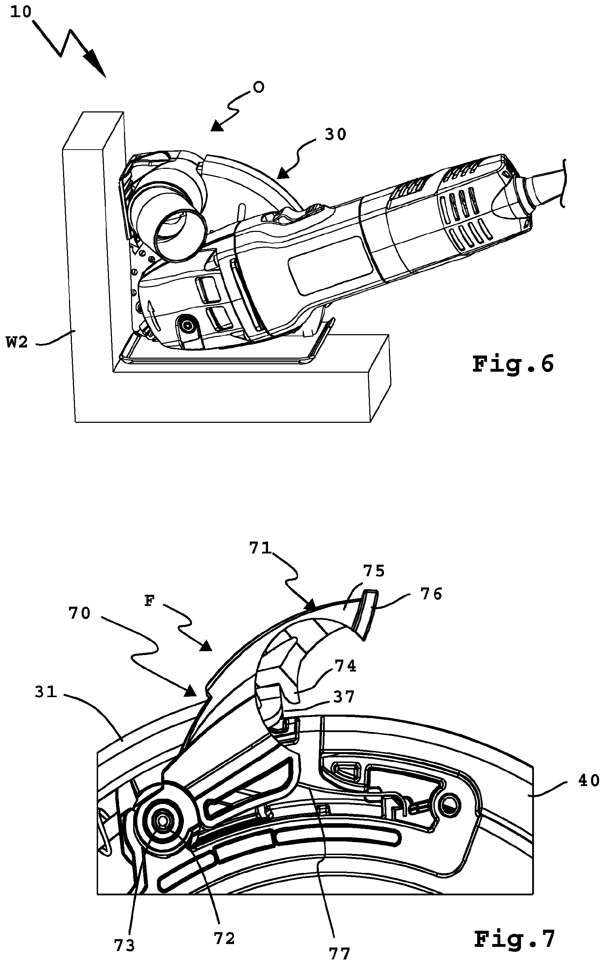

Zur ortsfesten Festlegung des Abdeckelements 40 ist eine Fixiereinrichtung 70 vorgesehen, die in einer Fixierstellung F, beispielsweise entsprechend Figur 3 oder 2, das Abdeckelement 40 ortsfest bezüglich des festen Teils der Abdeckvorrichtung 30, nämlich der Seitenrandabdeckung 31, hält. Die Fixiereinrichtung 70 umfasst eine Klinke 71, die an einem Schwenklager 72 schwenkbar an dem Abdeckelement 40 gelagert ist. Das Schwenklager 72 umfasst beispielsweise einen Bolzen 73, der sich zwischen den Seitenschenkeln 43, 44 erstreckt. Die Klinke 71 hat einen Klinkenvorsprung 74, der sich an einem vorderen, freien Endbereich 37 der Seitenrandabdeckung 31 verhaken kann, wenn er die Fixierstellung F (Figur 7) einnimmt. Die Klinke 71 umfasst weiterhin einen beispielsweise mit einem Daumen oder einem anderen Finger ergreifbaren Abschnitt 75, der als Hand-Betätigungselement 76 dient. Die Klinke 71 ist vorzugsweise durch eine Feder 77 in Richtung der Fixierstellung F vorgespannt, d.h. dass sich der Klinkenvorsprung 74 mit dem vorderen freien Endbereich 37 verhakt.

Weiterhin ist die Klinke 71 von der Seitenrandabdeckung 31 weg zu schwenken, um den Klinkenvorsprung 74 außer Eingriff mit dem Endbereiche 37 der Seitenrandabdeckung 31 zu bringen. Wenn also der Bediener auf die Klinke 71 in Richtung des Trennwerkzeugs 19 drückt, führt dies nicht zum Lösen der Fixiereinrichtung 70, sondern wirkt eher in einem gegenteiligen Sinne, nämlich in Richtung der Fixierstellung F.

Die Führungsplatte 22 erstreckt sich nur im Wesentlichen unterhalb oder neben der Seitenrandabdeckung 31, jedoch nicht im Bereich des Abdeckelements 40, so dass, wenn das Abdeckelement 40 in die Offenstellung O geschwenkt ist, der Abschnitt 26a des Trennwerkzeugs 19 frei in den Untergrund, beispielsweise die Wandfläche WF, einschneiden kann. Wenn jedoch das Abdeckelement 40 die Schließstellung oder Abdeckstellung D einnimmt, ist es vorteilhaft, wenn eine an seiner Unterseite angeordnete Führungsfläche 45b, die sich koplanar seiner zu der Führungsfläche 23 erstreckt, das Hand-Trenngerät 10 auch in Arbeitsrichtung A vorn führt und stützt (Figur 8).

## Patentansprüche

1. Freihändig führbares Hand-Trenngerät (10), insbesondere Handtrennschleifer oder Winkelschleifer, das eine Werkzeugaufnahme (18) für ein scheibenförmiges Trennwerkzeug (19) zum Einbringen eines Trennschnittes in ein zu bearbeitendes Werkobjekt (W1, W2) und einen in einem Maschinengehäuse (11) angeordneten Antriebsmotor (12) zum Dreh-Antreiben der Werkzeugaufnahme (18) um eine Werkzeugachse (29) aufweist, wobei das Hand-Trenngerät (10) zum Abdecken des Trennwerkzeugs (19) eine an dem Maschinengehäuse (11) angeordnete Abdeckvorrichtung (30) aufweist, die eine beim Betrieb des Trenngerätes am Maschinengehäuse (11) ortsfest festgelegte Seitenrandabdeckung (31) zum Abdecken eines Seitenrands (28) des Trennwerkzeugs (19) umfasst und beim Einbringen des Trennschnittes an der Oberseite des Werkstücks angeordnet ist, wobei die Abdeckvorrichtung (30) ein relativ zu der Seitenrandabdeckung (31) um eine mit der Werkzeugachse (29) koaxiale Schwenkachse (S) zwischen einer Abdeckstellung (D) und mindestens einer Offenstellung (O) schwenkbares Abdeckelement (40) zum Abdecken eines vor die ortsfeste Seitenrandabdeckung (31) vorstehenden Arbeitsabschnitts des Seitenrands (28) des Trennwerkzeugs (19) aufweist, wobei das Abdeckelement (40) in der Abdeckstellung (D) einen größeren Teil des Arbeitsabschnitts des Trennwerkzeugs (19) als in der Offenstellung (O) abdeckt und die Abdeckvorrichtung (30) in der Offenstellung des Abdeckelements (40) einen Winkelbereich von etwa oder mindestens 140 Grad freigibt, und wobei das Abdeckelement (40) an einem von der ortsfesten Seitenrandabdeckung (31) am weitesten entfernten freien Endbereich (45) durch Anschlagen oder Anlage an einer Anschlagfläche oder Anlagefläche (WF) in Arbeitsrichtung frontal vor dem Abdeckelement in Richtung der Offenstellung (O) betätigbar ist, **dadurch gekennzeichnet, dass**
- sich die Anschlagfläche oder Anlagefläche (WF) bezogen auf die Arbeitsrichtung (A) frontal vor dem Abdeckelement (40) erstreckt und nach oben vor die Oberseite des Werkstücks vorsteht oder
- das Hand-Trenngerät (10) für einen schiebenden Schnitt in das Werkobjekt (W1, W2) in der Arbeitsrichtung (A) vorgesehen ist, wobei der Antriebsmotor (12) die Werkzeugaufnahme (18) in einer Drehrichtung (53) antreibt, bei der das Trennwerkzeug (19) im Bereich des Abdeckelements (40) aus dem Werkobjekt (W1, W2) austritt und unter das Abdeckelement (40) hinein unter die Abdeckvorrichtung (30) dreht, oder
- bezüglich des Maschinengehäuses (11) ortsfeste Führungsflächen (23) des Trenngeräts (10) sich in Arbeitsrichtung (A) nach vorn nur bis zu maximal einem Bereich des Trennwerkzeugs (19) erstrecken, der nicht von dem Abdeckelement (40) freigebbar ist, oder
- bei vollständig in die Offenstellung (O) geschwenktem Abdeckelement (40) ein größerer Winkelbereich des Außenumfangs des Trennwerkzeugs (19) zum Eindringen in das Werkobjekt bereitsteht als mindestens 180°.

2. Hand-Trenngerät nach Anspruch 1, **dadurch gekennzeichnet, dass** an dem Abdeckelement (40) ein Sauganschluss (55) für eine Staubabsaugeinrichtung angeordnet ist, wobei vorteilhaft vorgesehen ist, dass der Sauganschluss (55) an dem an einem von der ortsfesten Seitenrandabdeckung (31) am weitesten entfernten freien Endbereich (45) des Abdeckelements (40) angeordnet ist und/oder zwischen dem Abdeckelement (40) und dem Trennwerkzeug (19) ein Sichtfenster vorhanden ist, durch das eine sich frontal vor dem Trennwerkzeug (19) befindliche Anrisslinie (M) sichtbar ist.

3. Hand-Trenngerät nach Anspruch 1 oder 2, **dadurch gekennzeichnet, dass** das Abdeckelement (40) an dem von der ortsfesten Seitenrandabdeckung (31) am weitesten entfernten freien Endbereich (45) durch Anschlagen oder Anlage an dem Werkobjekt (W1, W2) betätigbar ist.

4. Hand-Trenngerät nach einem der vorhergehenden Ansprüche, **dadurch gekennzeichnet, dass** an dem freien Endbereich (45) des Abdeckelements (40) eine Rolle und/oder ein Gleitkörper und/oder ein vor das Abdeckelement (40) vorstehender Anschlagvorsprung (47) zur Anlage oder zum Anschlagen an dem Werkobjekt (W1, W2) oder an der Anschlagfläche oder Anlagefläche (WF) in Arbeitsrichtung frontal vor dem Abdeckelement angeordnet ist.

5. Hand-Trenngerät nach einem der vorhergehenden Ansprüche, **dadurch gekennzeichnet, dass** das Abdeckelement (40) durch eine Federanordnung (50) in Richtung der Abdeckstellung (D) belastet ist.

6. Hand-Trenngerät nach einem der vorhergehenden Ansprüche, **dadurch gekennzeichnet, dass** die Abdeckvorrichtung (30) eine Fixiereinrichtung (70), insbesondere eine Rasteinrichtung und/oder eine Klemmeinrichtung und/oder eine Klinke (71), zum Fixieren des Abdeckelements (40) relativ zur ortsfesten Seitenrandabdeckung (31) insbesondere in der Abdeckstellung (D) aufweist, wobei die Fixiereinrichtung (70) zwischen einer das Abdeckelement (40) relativ zur ortsfesten Seitenrandabdeckung (31) freigebenden Lösestellung und einer das Abdeckelement (40) gegenüber der Seitenrandabdeckung (31) festlegenden Fixierstellung (F) verstellbar ist.

7. Hand-Trenngerät nach Anspruch 6, **dadurch gekennzeichnet, dass** die Fixiereinrichtung (70) ausschließlich in der Abdeckstellung (D) in die Fixierstellung (F) verstellbar ist und/oder ein an einer feststehenden Komponente des Trenngeräts (10), insbesondere der Abdeckvorrichtung (30) beweglich gelagertes Hand-Betätigungselement (76) aufweist, das in einer der Lösestellung zugeordneten Position weiter vor die feststehende Komponente des Trenngeräts (10) vorsteht als in der Fixierstellung (F).

8. Hand-Trenngerät nach einem der vorhergehenden Ansprüche, **dadurch gekennzeichnet, dass** das Abdeckelement (40) an der ortsfesten Seitenrandabdeckung (31) um eine um die Schwenkachse (S) verlaufende gekrümmte Bahn, insbesondere eine Kreisbahn, ohne eine Lagerwelle oder einen Lagerbolzen verschieblich gelagert ist.

9. Hand-Trenngerät nach einem der vorhergehenden Ansprüche, **dadurch gekennzeichnet, dass** die Abdeckvorrichtung (30) eine Montageöffnung (36) aufweist, durch die Werkzeugaufnahme (18) für einen Wechsel des Trennwerkzeugs (19) zugänglich ist, wobei die Montageöffnung (36) vorteilhaft im Wesentlichen oder mindestens einem Durchmesser des Trennwerkzeugs (19) entspricht, so dass das Trennwerkzeug (19) durch die Montageöffnung (36) von dem Trenngerät (10) entfernt werden kann.

10. Hand-Trenngerät nach einem der vorhergehenden Ansprüche, **dadurch gekennzeichnet, dass** das Abdeckelement (40) und/oder die ortsfeste Seitenrandabdeckung (31) ausschließlich den Seitenrand (28) des Trennwerkzeugs (19), insbesondere den zur Drehachse radialen Außenumfang des Trennwerkzeugs (19), abdecken und/oder zumindest teilweise aus einem transparenten Material bestehen.

11. Hand-Trenngerät nach einem der vorhergehenden Ansprüche, **dadurch gekennzeichnet, dass** das Abdeckelement (40) an einem Austrittsbereich (59) oder Eintrittsbereich (54), wo das Trennwerkzeug (19) beim Betrieb des Trenngeräts (10) aus dem Werkobjekt (W1, W2) austritt oder in das Werkobjekt (W1, W2) eintritt, einen solchen Abstand zu einer Flachseite des Trennwerkzeugs (19) aufweist, insbesondere etwa 1 bis 3 cm, dass der Austrittsbereich (59) oder Eintrittsbereich (54) und insbesondere ein in Arbeitsrichtung (A) dem Austrittsbereich (59) oder Eintrittsbereich (54) vorgelagerter Bereich des Werkobjekts (W1, W2) für einen Bediener zumindest schräg von der Flachseite des Trennwerkzeugs (19) her einsehbar ist.

12. Hand-Trenngerät nach einem der vorhergehenden Ansprüche, **dadurch gekennzeichnet, dass** die Abdeckvorrichtung (30) in der Offenstellung des Abdeckelements (40) einen Winkelbereich von etwa oder mindestens 160° bis 170°, vorzugsweise von etwa oder mindestens 190° bis 230°, insbesondere 190°, des Seitenrands (28) des Trennwerkzeugs (19) freigibt und/oder in der Abdeckstellung (D) des Abdeckelements (40) einen Winkelbereich von mindestens oder etwa 90-120°, insbesondere 110°, des Seitenrands (28) des Trennwerkzeugs (19) freigibt.

13. Hand-Trenngerät nach einem der vorhergehenden Ansprüche, **dadurch gekennzeichnet, dass** es keine sich neben der Abdeckvorrichtung (30) am Maschinengehäuse (11) angeordnete Führungsfläche (23), insbesondere keine Führungsplatte (22), zur Führung an einem Untergrund, insbesondere einer Führungsschiene, aufweist und/oder dass insbesondere ausschließlich an einem von dem Abdeckelement (40) am weitesten entfernten Winkelabschnitt der ortsfesten Seitenrandabdeckung (31) eine Führungsfläche (23) zum Führen an dem Werkobjekt (W1, W2) angeordnet ist und/oder dass die bezüglich des Maschinengehäuses (11) ortsfesten und sich in Arbeitsrichtung (A) nach vorn nur bis zu maximal einem Bereich des Trennwerkzeugs (19) erstreckenden Führungsflächen (23) des Trenngeräts (10) einen Bestandteil der Abdeckvorrichtung (30) bilden und/oder dass in Arbeitsrichtung (A) des Trenngeräts (10) neben einem durch das in Richtung der Offenstellung (O) verstellten Abdeckelement (40) freigegebenen Bereich des Trennwerkzeugs (19) keine Führungsfläche (23) befindet.

14. Hand-Trenngerät nach einem der vorhergehenden Ansprüche, **dadurch gekennzeichnet, dass** die Werkzeugaufnahme (18) und die Abdeckeinrichtung an einem freien Endbereich (45) des Maschinengehäuses (11) angeordnet sind und/oder dass das Maschinengehäuse (11) in der Art eines mit einer Hand umgreifbaren Handgriffes ausgestaltet ist oder einen solchen Handgriff aufweist und/oder das Maschinengehäuse (11) in der Art eines als Handgriff dienenden Haltearms für das Trennwerkzeug (19) ausgestaltet ist.

15. Hand-Trenngerät nach einem der vorhergehenden Ansprüche, **dadurch gekennzeichnet, dass** der Antriebsmotor (12) die Werkzeugaufnahme (18) in einer Drehrichtung (53) antreibt, bei der das Trennwerkzeug (19) von dem Abdeckelement (40) her zur ortsfesten Seitenrandabdeckung (31) hin antreibt, und/oder der die Werkzeugaufnahme (18) aufweisende Abschnitt des Maschinengehäuses (11) in einer Arbeitsrichtung (A) des Trenngeräts (10) vorn ist, so dass das Trenngerät (10) für einen schiebenden Trennschnitt ausgestaltet ist.

## Claims

1. Hand-held power cutter (10), in particular hand-held grinder or angle grinder, able to be guided freehanded, which has a tool holder (18) for a disc-shaped cutting tool (19) for making a separating cut in a workpiece (W1, W2) to be machined, and a drive motor (12) mounted in a machine housing (11) for rotary driving of the tool holder (18) around a tool axis (29), wherein the hand-held power cutter (10) has for covering the cutting tool (19) a covering device (30) mounted on the machine housing (11) and which includes a side edge cover (31), fixed immovably to the machine housing (11) in operation of the power cutter, for covering a side edge (28) of the cutting tool (19) and in making of the separating cut located on top of the workpiece, wherein the covering device (30) has a covering element (40) which is pivotable relative to the side edge cover (31) around a swivel axis (S) coaxial to the tool axis (29) between a covering position (D) and at least one open position (O) for covering a working section of the side edge (28) of the cutting tool (19) protruding from the immovable side edge cover (31), wherein the covering element (40) in the covering position (D) covers a greater part of the working section of the cutting tool (19) than in the open position (0), and the covering device (30) in the open position (0) of the covering element (40) releases an angular range of around or at least 140 degrees, and wherein the covering element (40) may be actuated at a free end section (45) furthest removed from the immovable side edge cover (31) by hitting against or contact with a stop face or contact face (WF) in the direction of working frontally ahead of the covering element in the direction of the open position (O), **characterised in that**
- the stop face or contact face (WF) extends frontally in front of the covering element (40) with respect to the direction of working (A) and projects upwards in front of the top side of the workpiece, or
- the hand-held cutter (10) is provided for a sliding cut into the workpiece (W1, W2) in the direction of working (A), wherein the drive motor (12) drives the tool holder (18) in a direction of rotation (53) in which in which the cutting tool (19) exits from the workpiece (W1, W2) in the region of the covering element (40) and rotates under the covering element (40) into the covering device (30), **or**
- guide surfaces (23) of the cutter (10) which are stationary with respect to the machine housing (11) extend towards the front in the direction of working (A only up to the maximum of an area of the cutting tool (19) which cannot be released by the covering element (40), **or**
- if the covering element (40) is completely pivoted into the opening position (0), an angular range of the outer circumference of the cutting tool (10) of more than at least 180° is available for penetrating into the workpiece.

2. Hand-held power cutter according to claim 1, **characterised in that** there is provided on the covering element (40) a suction port (55) for a dust extraction device, wherein it is advantageously provided that the suction port (55) is located on a free end section (45) of the covering element (40)furthest removed from the immovable side edge cover (31) and/or there is provided between the covering element (40) and the cutting tool (19) an inspection window, through which a scribe line (M) located in front of the cutting tool (19) is visible.

3. Hand-held power cutter according to claim 1 or 2, **characterised in that** the covering element (40) on the free end section (45) furthest removed from the immovable side edge cover (31) may be actuated by hitting against or contact with the workpiece (W1, W2).

4. Hand-held power cutter according to any of the preceding claims, **characterised in that** there is provided on the free end section (45) of the covering element (40) a roller and/or a sliding body and/or a stop projection (47) protruding from the covering element (40) for hitting against the workpiece (W1, W2) or stop face or contact face (WF) in the direction of working frontally ahead of the covering element.

5. Hand-held power cutter according to any of the preceding claims, **characterised in that** the covering element (40) is biased by a spring assembly (50) in the direction of the covering position (D).

6. Hand-held power cutter according to any of the preceding claims, **characterised in that** the covering device (30) has a fixing device (70), in particular a latching device and/or a clamping device and/or a latch (71), for fixing the covering element (40) relative to the immovable side edge cover (31), in particular in the covering position (D), wherein the fixing device (70) is adjustable between a release position releasing the covering element (40) relative to the immovable side edge cover (31), and a fixing position (F) which fixes the covering element (40) relative to the side edge cover (31).

7. Hand-held power cutter according to claim 6, **characterised in that** the fixing device (70) is adjustable in the fixing position (F) only in the covering position (D) and/or has a hand operating element (76) movably mounted on a fixed component of the hand-held power cutter (10), in particular the covering device (30) and which, in a position assigned to the release position, extends further in front of the fixed component of the hand-held power cutter (10) than in the fixing position (F).

8. Hand-held power cutter according to any of the preceding claims, **characterised in that** the covering element (40) is displaceably mounted on the immovable side edge cover (31) around a track, in particular a circular track, running around the swivel axis (S), without a bearing shaft or bearing pin.

9. Hand-held power cutter according to any of the preceding claims, **characterised in that** the covering device (30) has a mounting hole (36) through which the tool holder (18) is accessible for changing the cutting tool (19), wherein the mounting hole (36) corresponds substantially or at least to the diameter of the cutting tool (19), so that the cutting tool (19) may be removed from the hand-held power cutter (10) through the mounting hole (36).

10. Hand-held power cutter according to any of the preceding claims, **characterised in that** the covering element (40) and/or the immovable side edge cover (31) cover only the side edge (28) of the cutting tool (19), in particular the outer periphery of the cutting tool (19) radial to the rotation axis, and/or are made at least partly of a transparent material.

11. Hand-held power cutter according to any of the preceding claims, **characterised in that** the covering element (40) at an exit zone (59) or an entry zone (54), where the cutting tool (19) in operation of the hand-held power cutter (10) exits from the workpiece (W1, W2) or enters into the workpiece (W1, W2), has a distance from a flat side of the cutting tool (19), in particular around 1 to 3 cm., such that the exit zone (59) or entry zone (54) and in particular an areaof the workpiece (W1, W2) upstream in the direction of working (A) of the exit zone (59) or entry zone (54) is visible for an operator at least at an angle from the flat side of the cutting tool (19).

12. Hand-held power cutter according to any of the preceding claims, **characterised in that** the covering device (30) releases in the open position of the covering element (40) an angular range of around or at least 160° to 170°, preferably of around or at least 190° to 230°, in particular 190°, of the side edge (28) of the cutting tool (19) and/or in the covering position (D) of the covering element (40) releases an angular range of at least or around 90° - 120°, in particular 110°, of the side edge (28) of the cutting tool (19).

13. Hand-held power cutter according to any of the preceding claims, **characterised in that** it has no guide surface (23) arranged next to the covering device (30) on the machine housing (11), in particular no guide plate (22), for guidance on a base, in particular a guide rail, and/or that a guide surface (23) for guidance on the workpiece (W1, W2) is arranged in particular solely on an angle section of the immovable side edge cover (31) furthest removed from the covering element (40) and/or that the guide surfaces (23) of the cutting tool (10) which are immovable with respect to the machine housing (11) and extend forwards only up to the maximum of an area of the cutting tool (19) in the direction of working (A) form a component of the covering device (30), and/or that no guide surface (23) is found in the direction of working (A) of the hand-held power cutter (10) next to an area of the cutting tool (19) released next to a covering element (40) adjusted in the direction of the open position (0).

14. Hand-held power cutter according to any of the preceding claims, **characterised in that** the tool holder (18) and the covering device are arranged at a free end section (45) of the machine housing (11) and/or that the machine housing (11) is designed in the manner of a handle which may be gripped by one hand or has such a handle and/or the machine housing (11) is designed in the manner of a holding arm for the cutting tool (19) serving as a handle.

15. Hand-held power cutter according to any of the preceding claims, **characterised in that** the drive motor (12) drives the tool holder (18) in a direction of rotation (53) in which the cutting tool (19) drives from the covering element (40) towards the immovable side edge cover (31) and/or the section of the machine housing (11) with the tool holder (18) is leading in a direction of working (A) of the hand-held power cutter (10), so that the hand-held power cutter (10) is designed for a pushing separating cut.

## Revendications

1. Appareil de séparation manuel (10) pouvant être guidé de gré à gré, en particulier tronçonneuse à meule manuelle ou meuleuse d'angle, qui présente un logement d'outil (18) pour un outil de séparation (19) en forme de disque pour pratiquer une découpe de séparation dans un objet de travail (W1, W2) à usiner et un moteur d'entraînement (12) disposé dans un carter de machine (11), pour entraîner en rotation le logement d'outil (18) autour d'un axe d'outil (29), dans lequel l'appareil de séparation manuel (10) présente pour recouvrir l'outil de séparation (19) un dispositif de recouvrement (30) disposé au niveau du carter de machine (11), qui comprend un recouvrement de bord latéral (31) fixé de manière stationnaire au niveau du carter de machine (11) lors du fonctionnement de l'appareil de séparation, pour recouvrir un bord latéral (28) de l'outil de séparation (19) et est disposé au niveau du côté supérieur de la pièce lorsque l'entaille de séparation est pratiquée, dans lequel le dispositif de recouvrement (30) présente un élément de recouvrement (40) pouvant pivoter par rapport au recouvrement de bord latéral (31) autour d'un axe de pivotement (S) coaxial avec l'axe d'outil (29) entre une position de recouvrement (D) et au moins une position ouverte (O), pour recouvrir une section de travail, faisant saillie du recouvrement de bord latéral (31) stationnaire, du bord latéral (28) de l'outil de séparation (19), dans lequel l'élément de recouvrement (40) recouvre, dans la position de recouvrement (D), une partie plus importante de la section de travail de l'outil de séparation (19) que dans la position ouverte (O) et le dispositif de recouvrement (30) dégage dans la position ouverte de l'élément de recouvrement (40) une plage angulaire d'environ ou d'au moins 140 degrés, et dans lequel l'élément de recouvrement (40) peut être actionné en direction de la position ouverte (O) au niveau d'une zone d'extrémité (45) libre la plus éloignée du recouvrement de bord latéral (31) stationnaire par butée ou appui au niveau d'une surface de butée ou d'une surface d'appui (WF) dans la direction de travail de manière frontale devant l'élément de recouvrement, **caractérisé en ce que**
- la surface de butée ou la surface d'appui (WF) s'étend de manière frontale sur devant l'élément de recouvrement (40) par rapport à la direction de travail (A) et fait saillie vers le haut devant le côté supérieur de la pièce, ou
- l'appareil de séparation manuel (10) est prévu pour une découpe par glissement dans l'objet de travail (W1, W2) dans la direction de travail (A), dans lequel le moteur d'entraînement (12) entraînement le logement d'outil (18) dans une direction de rotation (53), dans laquelle l'outil de séparation (19) sort de l'objet de travail (W1, W2) dans la zone de l'élément de recouvrement (40) et tourne à l'intérieur sous l'élément de recouvrement (40) sous le dispositif de recouvrement (30), ou
- des surfaces de guidage (23) de l'appareil de séparation (10) stationnaires par rapport au carter de machine (11) s'étendent dans la direction de travail (A) vers l'avant seulement jusqu'à au maximum une zone de l'outil de séparation (19), qui ne peut pas être dégagée par l'élément de recouvrement (40), ou
- lorsque l'élément de recouvrement (40) est totalement pivoté dans la position ouverte (O), une plage angulaire supérieure à au moins 180° de la périphérie extérieure de l'outil de séparation (19) est disponible pour entrer dans l'objet de travail.

2. Appareil de séparation manuel selon la revendication 1, **caractérisé en ce qu'**un raccord d'aspiration (55) pour un dispositif d'évacuation par aspiration de poussières est disposé au niveau de l'élément de recouvrement (40), dans lequel il est prévu de manière avantageuse que le raccord d'aspiration (55) est disposé au niveau de la zone d'extrémité (45) libre la plus éloignée du recouvrement de bord latéral (31) stationnaire, de l'élément de recouvrement (40) et/ou une fenêtre d'inspection est présente entre l'élément de recouvrement (40) et l'outil de séparation (19), par laquelle une ligne de découpe (M) se trouvant de manière frontale devant l'outil de séparation (19) est visible.

3. Appareil de séparation manuel selon la revendication 1 ou 2, **caractérisé en ce que** l'élément de recouvrement (40) peut être actionné au niveau de la zone d'extrémité (45) libre la plus éloignée du recouvrement de bord latéral (31) stationnaire par butée ou appui au niveau de l'objet de travail (W1, W2).

4. Appareil de séparation manuel selon l'une quelconque des revendications précédentes, **caractérisé en ce qu'**un rouleau et/ou un corps glissant et/ou une saillie de butée (47) faisant saillie de l'élément de recouvrement (40) destiné(e) à venir en appui ou à venir buter au niveau de l'objet de travail (W1, W2) ou au niveau de la surface de butée ou de la surface d'appui (WF) dans la direction de travail de manière frontale devant l'élément de recouvrement sont disposés au niveau de la zone d'extrémité (45) libre de l'élément de recouvrement (40).

5. Appareil de séparation manuel selon l'une quelconque des revendications précédentes, **caractérisé en ce que** l'élément de recouvrement (40) est contraint par un ensemble de ressort (50) en direction de la position de recouvrement (D).

6. Appareil de séparation manuel selon l'une quelconque des revendications précédentes, **caractérisé en ce que** le dispositif de recouvrement (30) présente un système de blocage (70), en particulier un système d'enclenchement et/ou un système de serrage et/ou un loquet (71), pour bloquer l'élément de recouvrement (40) par rapport au recouvrement de bord latéral (31) stationnaire, en particulier dans la position de recouvrement (D), dans lequel le système de blocage (70) peut être ajusté entre une position de déblocage dégageant l'élément de recouvrement (40) par rapport au recouvrement de bord latéral (31) stationnaire et une position de blocage (F) immobilisant l'élément de recouvrement (40) par rapport au recouvrement de bord latéral (31).

7. Appareil de séparation manuel selon la revendication 6, **caractérisé en ce que** le système de bocage (70) peut être ajusté, exclusivement dans la position de recouvrement (D), dans la position de blocage (F) et/ou présente un élément d'actionnement manuel (76) monté de manière mobile au niveau d'un composant immobile de l'appareil de séparation (10), en particulier du dispositif de recouvrement (30), qui fait saillie, dans une position associée à la position de déblocage, plus loin du composant immobile de l'appareil de séparation (10) que dans la position de blocage (F).

8. Appareil de séparation manuel selon l'une quelconque des revendications précédentes, **caractérisé en ce que** l'élément de recouvrement (40) est monté au niveau du recouvrement de bord latéral (31) stationnaire de manière à pouvoir coulisser autour d'une trajectoire incurvée s'étendant autour de l'axe de pivotement (S), en particulier une trajectoire circulaire, sans un arbre de palier ou un axe de palier.

9. Appareil de séparation manuel selon l'une quelconque des revendications précédentes, **caractérisé en ce que** le dispositif de recouvrement (30) présente une ouverture de montage (36), par laquelle le logement d'outil (18) est accessible pour un changement de l'outil de séparation (19), dans lequel l'ouverture de montage (36) correspond de manière avantageuse sensiblement ou au moins à un diamètre de l'outil de séparation (19) de sorte que l'outil de séparation (19) peut être retiré de l'appareil de séparation (10) par l'ouverture de montage (36).

10. Appareil de séparation manuel selon l'une quelconque des revendications précédentes, **caractérisé en ce que** l'élément de recouvrement (40) et/ou le recouvrement de bord latéral (31) stationnaire recouvrent exclusivement le bord latéral (28) de l'outil de séparation (19), en particulier la périphérie extérieure, radiale par rapport à l'axe de rotation, de l'outil de séparation (19) et/ou sont constitués au moins en partie d'un matériau transparent.

11. Appareil de séparation manuel selon l'une quelconque des revendications précédentes, **caractérisé en ce que** l'élément de recouvrement (40) présente, au niveau d'une zone de sortie (59) ou d'une zone d'entrée (54), où l'outil de séparation (19) sort de l'objet de travail (W1, W2) ou entre dans l'objet de travail (W1, W2) lors du fonctionnement de l'appareil de séparation (10), une distance telle par rapport à un côté plat de l'outil de séparation (19), en particulier environ 1 à 3 cm, que la zone de sortie (59) ou la zone d'entrée (54) et en particulier une zone, montée en amont dans la direction de travail (A) de la zone de sortie (59) ou de la zone d'entrée (54), de l'objet de travail (W1, W2) peuvent être vues par un utilisateur au moins de manière oblique depuis le côté plat de l'outil de séparation (19).

12. Outil de séparation manuel selon l'une quelconque des revendications précédentes, **caractérisé en ce que** le dispositif de recouvrement (30) dégage, dans la position ouverte de l'élément de recouvrement (40), une plage angulaire d'environ ou d'au moins 160° à 170°, de préférence d'environ ou d'au moins 190° à 230°, en particulier de 190°, du bord latéral (28) de l'outil de séparation (19) et/ou dégage, dans la position de recouvrement (D) de l'élément de recouvrement (40), une plage angulaire d'au moins ou d'environ 90-120°, en particulier de 110°, du bord latéral (28) de l'outil de séparation (19).

13. Appareil de séparation manuel selon l'une quelconque des revendications précédentes, **caractérisé en ce qu'**il ne présente aucune surface de guidage (23) disposée au niveau du carter de machine (11) à côté du dispositif de recouvrement (30), en particulier aucune plaque de guidage (22), pour le guidage au niveau d'un sol, en particulier d'un rail de guidage, et/ou qu'une surface de guidage (23) pour le guidage au niveau de l'objet de travail (W1, W2) est disposée en particulier exclusivement au niveau d'une section angulaire, la plus éloignée de l'élément de recouvrement (40), du recouvrement de bord latéral (31) stationnaire, et/ou que les surfaces de guidage (23) de l'appareil de séparation (10) stationnaires par rapport au carter de machine (11) et s'étendant dans la direction de travail (A) vers l'avant seulement jusqu'à au maximum une zone de l'outil de séparation (19) forment un élément constitutif du dispositif de recouvrement (30) et/ou qu'aucune surface de guidage (23) ne se trouve dans la direction de travail (A) de l'appareil de séparation (10) à côté d'une zone, dégagée par l'élément de recouvrement (40) ajusté en direction de la position ouverte (O), de l'outil de séparation (19).

14. Appareil de séparation manuel selon l'une quelconque des revendications précédentes, **caractérisé en ce que** le logement d'outil (18) et le dispositif de recouvrement sont disposés au niveau d'une zone d'extrémité (45) libre du carter de machine (11), et/ou que le carter de machine (11) est configuré à la manière d'une poignée pouvant être saisie d'une main ou présente une poignée de ce type et/ou le carter de machine (11) est configuré à la manière d'un bras de maintien, faisant office de poignée, pour l'outil de séparation (19).

15. Appareil de séparation manuel selon l'une quelconque des revendications précédentes, **caractérisé en ce que** le moteur d'entraînement (12) entraîne le logement d'outil (18) dans une direction de rotation (53), dans laquelle l'outil de séparation (19) entraîne depuis l'élément de recouvrement (40) en direction du recouvrement de bord latéral (31) stationnaire et/ou la section, présentant le logement d'outil (18), du carter de machine (11) est à l'avant dans une direction de travail (A) de l'appareil de séparation (10) de sorte que l'appareil de séparation (10) est configuré pour une découpe de séparation de glissement.
